# EUROPEAN PATENT APPLICATION

(11) **EP 4 656 437 A1**
(43) Date of publication of application: **03.12.2025**
(21) Application number: 23935827.8
(22) Date of filing: 20.11.2023
(51) Int. Cl.: B60L 3/00, B60L 58/10, H02J 7/00

(54) **POWER INTERRUPTION METHOD AND VEHICLE SYSTEM PROVIDING SAME**

(30) Priority: 03.05.2023 KR 20230057832
(71) Applicant: LG Energy Solution, Ltd., Seoul 07335 (KR)
(72) Inventor: SHIN, Seong Kyun, Daejeon 34122 (KR)
(74) Representative: Plasseraud IP
(86) International application number: PCT/KR2023/018669
(87) International publication number: WO 2024/228442

(57) **Abstract**

Disclosed are a power interruption method and a vehicle system providing the method. The vehicle system includes: a battery system including a main battery including a plurality of battery cells, a main relay electrically connecting the main battery to a charge system, a battery management system (BMS) controlling the main relay, and a battery communication unit; an auxiliary battery for supplying drive power to the main relay; a first power interruption switch for connecting the auxiliary battery and the main relay such that power discharged from the auxiliary battery is supplied to the main relay as drive power; a vehicle communication unit in communication with the charge system and the battery communication unit; and a vehicle control unit for controlling the first power interruption switch to be turned off upon receiving a first emergency alarm message including status information indicating that the main relay is not controlled to be turned off from the battery system via the vehicle communication unit.

## Description

### [Technical Field]

### CROSS-REFERENCE TO RELATED APPLICATION

This application claims priority to and the benefit of Korean Patent Application No. 10-2023-0057832 filed in the Korean Intellectual Property Office on May 3, 2023, the entire contents of which are incorporated herein by reference.

The present disclosure relates to a power interruption method of a boosting charge system and a vehicle system providing the same.

### [Background Art]

Environmentally-friendly vehicles, such as electric or hybrid vehicles, are equipped with high-voltage batteries to provide drive power to an electric motor. A battery system includes a main relay to control the electrical connection to a boosting charger that is an external device. The battery system may further include a boosting charge relay to protect the high-voltage battery during the high-voltage charging process.

In the structure where the main relay and the boosting charge relay are connected in series, the high-voltage battery and the boosting charger can be electrically connected only when both the main relay and the boosting charge relay are turned on. For example, in the event of failure of the main relay, problems, such as overcharging the high-voltage battery, may be prevented by turning off the boosting charge relay.

When the battery management system (BMS), which controls the charging and discharging of the high-voltage battery, fails, control of the main relay and/or the boosting charge relay may not be possible. Alternatively, when the main relay and/or boosting charge relay has a fault, such as fusing, the turn on and turn off control may not be controlled by the BMS. This may cause serious problems for high-voltage batteries, such as overcharging, which may lead to ignition, shortened lifespan, and other issues.

Therefore, there needs a method to ensure that the battery system and the boosting charger are electrically isolated in the event of failure of at least one of the BMS, the main relay and the boosting charge relay.

### [Disclosure]

### [Technical Problem]

The present disclosure attempts to provide a power interruption method that is capable of electrically disconnecting a battery system and a boosting charger in an emergency situation by interrupting power supplying drive power to a main relay and a boosting charge relay, and a vehicle system providing the method.

### [Technical Solution]

An exemplary embodiment of the present disclosure provides a vehicle system including: a battery system including a main battery including a plurality of battery cells, a main relay electrically connecting the main battery to a charge system, a battery management system (BMS) controlling the main relay, and a battery communication unit; an auxiliary battery for supplying drive power to the main relay; a first power interruption switch for connecting the auxiliary battery and the main relay such that power discharged from the auxiliary battery is supplied to the main relay as drive power; a vehicle communication unit in communication with the charge system and the battery communication unit; and a vehicle control unit for controlling the first power interruption switch to be turned off upon receiving a first emergency alarm message including status information indicating that the main relay is not controlled to be turned off from the battery system via the vehicle communication unit.

The vehicle system may further include: a boosting charge relay connected with the main relay in series, and a second power interruption switch for connecting the auxiliary battery and the boosting charge relay such that power discharged from the auxiliary battery is supplied to the boosting charge relay as drive power.

The vehicle control unit may control, upon receiving the first emergency alarm message, the second power interruption switch to be turned off. The vehicle control unit may control, upon receiving a second emergency alarm message including status information indicating that a predetermined charging condition is not satisfied from the charge system via the vehicle communication unit, via the BMS, the main relay and the boosting charge relay to be turned off.

The vehicle control unit may control, upon receiving the second emergency alarm message, the first power interruption switch and the second power interruption switch to be turned off. The auxiliary battery may be a low-power battery that provides drive power to an electronic component equipped in the vehicle system.

The charge system may be a boosting charge system that charges the main battery in less than a predetermined reference time.

Another exemplary embodiment of the present disclosure provides a power interruption method of interrupting an electrical connection between a battery system and a charge system, the battery system including a main battery including a plurality of battery cells, and a main relay electrically connecting the main battery and the charge system, the power interruption method including: receiving a first emergency alarm message including status information indicating that the main relay is not controlled to be turned off from the battery system; and controlling a first power interruption switch connecting the main relay with an auxiliary battery supplying drive power to the main relay to be turned off.

The battery system may further include a boosting charge relay connected in series with the main relay, and a second power interruption switch connecting the boosting charge relay with the auxiliary battery supplying drive power to the boosting charge relay, and the controlling of the first power interruption switch to be turned off may further include controlling the second power interruption switch to be turned off.

The power interruption method may further include: prior to the receiving of the first emergency alarm message from the battery system, receiving a second emergency alarm message including status information indicating that a preset charging condition is not satisfied from the charge system; and delivering a signal to the battery system that controls the main relay and the boosting charge relay to be turned off.

### [Advantageous Effects]

According to the present disclosure, in an emergency situation where the main relay cannot be turned off by a control signal due to failure of the battery management system (BMS), it is possible to reliably break the high current path connecting the battery system and the boosting charge system by physically turning off the main relay by interrupting the drive power supplied to the main relay.

The present disclosure may use both a method of turning off the main relay electrically connecting the battery system and the boosting charge system with a control signal and a method of turning off the main relay by interrupting the drive power supplied to the main relay, thereby effectively preventing dangerous situations, such as fire outbreaks.

### [Description of the Drawings]

FIG. 1 is a block diagram illustrating a battery system, a vehicle system in which the battery system is mounted, and a charge system electrically connected to the battery system to provide power according to an exemplary embodiment.
FIG. 2 is a circuit diagram illustrating a connection relationship between the battery system and the charge system of FIG. 1 in detail.
FIG. 3 is a flow diagram illustrating a power interruption method according to another embodiment.
FIG. 4 is a flow diagram illustrating a power interruption method according to another embodiment.

### [Mode for Invention]

Hereinafter, an exemplary embodiment disclosed in the present specification will be described in detail with reference to the accompanying drawings, and the same or similar constituent factor is denoted by the same reference numeral regardless of a reference numeral, and a repeated description thereof will be omitted. Suffixes, "module" and and/or "unit" for a constituent element used for the description below are given or mixed in consideration of only easiness of the writing of the specification, and the suffix itself does not have a discriminated meaning or role. Further, in describing the exemplary embodiment disclosed in the present disclosure, when it is determined that detailed description relating to well-known functions or configurations may make the subject matter of the exemplary embodiment disclosed in the present disclosure unnecessarily ambiguous, the detailed description will be omitted. Further, the accompanying drawings are provided for helping to easily understand exemplary embodiments disclosed in the present specification, and the technical spirit disclosed in the present specification is not limited by the accompanying drawings, and it will be appreciated that the present disclosure includes all of the modifications, equivalent matters, and substitutes included in the spirit and the technical scope of the present disclosure.

Terms including an ordinary number, such as first and second, are used for describing various constituent elements, but the constituent elements are not limited by the terms. The terms are used only to discriminate one constituent element from another constituent element.

It should be understood that when one constituent element referred to as being "coupled to" or "connected to" another constituent element, one constituent element can be directly coupled to or connected to the other constituent element, but intervening elements may also be present. By contrast, when one constituent element is referred to as being "directly coupled to" or "directly connected to" another constituent element, it should be understood that there are no intervening elements.

In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

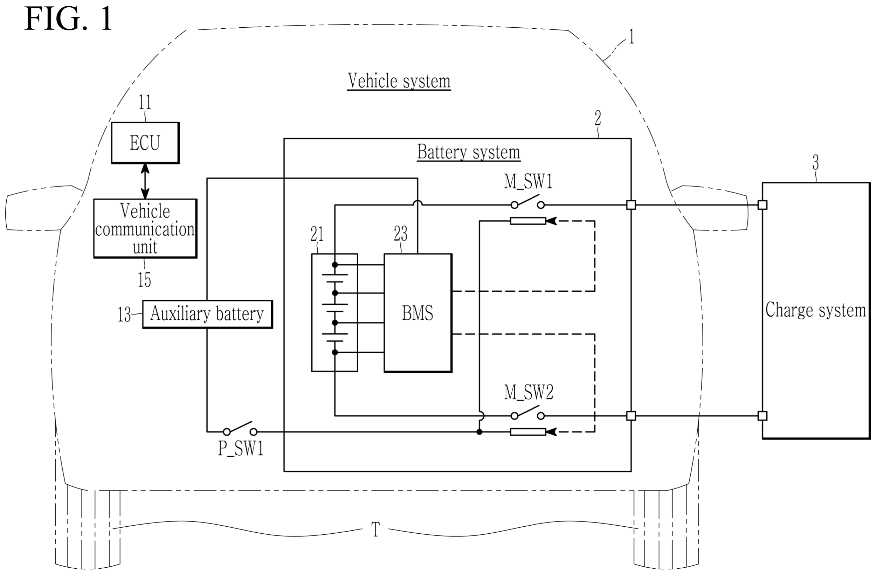

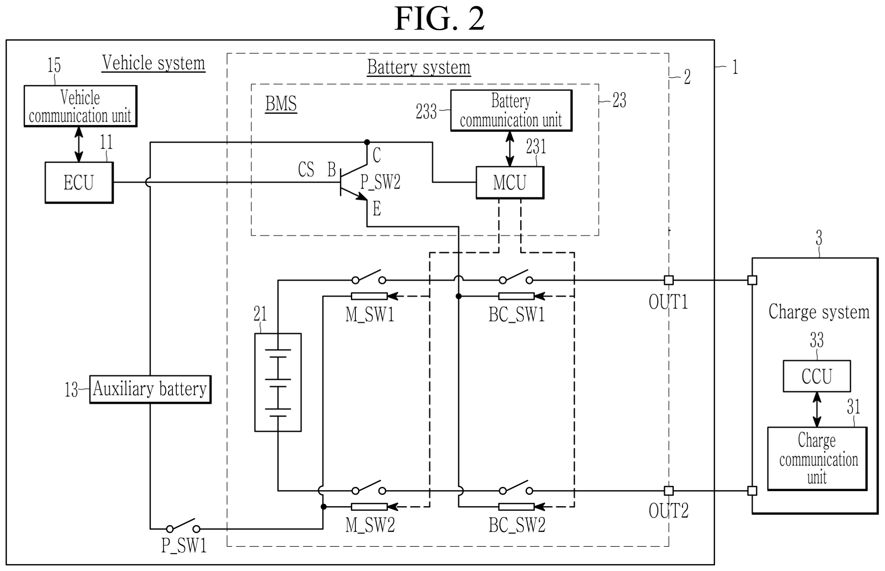

FIG. 1 is a block diagram illustrating a battery system, a vehicle system in which the battery system is mounted, and a charge system electrically connected to the battery system to provide power according to an exemplary embodiment, and FIG. 2 is a circuit diagram illustrating a connection relationship between the battery system and the charge system of FIG. 1 in detail.

Referring now to FIGS. 1 and 2, a vehicle system 1 may be an electric vehicle or hybrid vehicle equipped with a battery system 2. However, the present disclosure is not limited thereto, and the vehicle system 1 may include various kinds of higher-level systems in which the battery system 2 is equipped.

The vehicle system 1 includes a first power interruption switch P_SW1, a vehicle electronic control unit (ECU) 11, an auxiliary battery 13, and a vehicle communication unit 15.

The first power interruption switch P_SW1 may electrically connect the auxiliary battery 13 and main relays M_SW1 and M_SW2 of the battery system 2. When the first power interruption switch P_SW1 is turned on, the main relays M_SW1 and M_SW2 may be supplied with drive power. When the first power interruption switch P_SW1 is turned off, the main relays M_SW1 and M_SW2 may not be supplied with drive power.

For example, the first power interruption switch P_SW1 may be an electronic relay that utilizes semiconductor elements to provide fast response, low electrical noise and low noise. For example, the vehicle system 1 using the boosting charge method may be equipped with the first power interruption switch P_SW1. The boosting charging method may be a method for charging the main battery 21 of the battery system 2 in a time period shorter than a predetermined reference time.

According to the exemplary embodiment, referring to FIG. 1, when the first power interruption switch P_SW1 is turned off under the control of the vehicle ECU 11, the supply of drive power to the main relays M_SW1 and M_SW2 of the battery system 2 is interrupted. Then, the main relays M_SW1 and M_SW2 are turned off. In other words, the first power interruption switch P_SW1 may be a switch that physically controls the main relays M_SW1 and M_SW2 to be turned off by interrupting the supply of drive power.

The vehicle ECU 11 may control the entire vehicle system 1. According to the exemplary embodiment, in the charging mode in which the battery system 2 and the charge system 3 are electrically connected and the main battery 21 is charged, when an event corresponding to an emergency situation occurs, the vehicle ECU 11 may directly control the first power interruption switch P_SW1 to interrupt the drive power supplied to the main relays M_SW1 and M_SW2. Alternatively, the vehicle ECU 11 may control the BMS 23 such that the main relays M_SW1 and M_SW2 are turned off. When the drive power is interrupted or the main relays M_SW1 and M_SW2 are turned off by a control signal, the high current path connecting the battery system 2 and the charge system 3 may be disconnected.

The auxiliary battery 13 may be a low-power battery that provides drive power to various electronic components equipped in the vehicle system 1. For example, the auxiliary battery 13 may be a lead-acid battery that provides drive power (for example, 12 volt voltage power) to the mechanical relay (switch).

The vehicle communication unit 15 may include a communication module communicable with each of the battery system 2 and the charge system 3. For example, the vehicle communication unit 15 may receive a first emergency alarm message from the battery system 2. The first emergency alarm message may include information about a status in which the main relays M_SW1 and M_SW2 of the battery system 2 are not controlled to be turned off due to various causes. In another example, the vehicle communication unit 15 may receive a second emergency alarm message from the charge system 3. The second emergency alarm message may include status information that does not meet a preset charging condition. In other words, when the main battery 21 of the battery system 2 exhibits an abnormal status during the charging process, the charge system 3 may transmit a second emergency alarm message to the vehicle system 1.

Referring to FIG. 2, the battery system 2 includes the main battery 21, the main relays M_SW1 and M_SW2, boosting charge relays BC_SW1 and BC_SW2, a second power interruption switch P_SW2, and the battery management system (hereinafter referred to as "BMS") 23.

The main battery 21 may include a plurality of battery cells connected in series and parallel. In some exemplary embodiments, the battery cell may be a rechargeable secondary battery. A predetermined number of battery cells are connected in series to form a battery module, a predetermined number of battery modules are connected in series to form a battery pack, and a predetermined number of battery packs are connected in parallel to form a battery bank to provide the desired power. FIG. 1 illustrates the main battery 21 having the plurality of battery cells connected in series, but without limitation, the main battery 21 may be formed in the unit of a battery module, battery pack, or battery bank.

The main battery 21 may be a battery that provides high-powered power to an external device (for example, a motor). In FIG. 1, the main battery 21 may be connected between two output terminals OUT1 and OUT2 of the battery system 2. The configurations illustrated in FIG. 1 and the connection relationship between the configurations are examples, but the invention is not limited thereto.

The main relays M_SW1 and M_SW2 may electrically connect or disconnect the battery system 2 and the charge system 3. For example, the main relays M_SW1 and M_SW2 may correspond to mechanical relays that are turned on by being supplied with drive power.

The main relays M_SW1 and M_SW2, while receiving drive power from the auxiliary battery 13, may be switched to turn-on or turn-off in response to a control signal from the BMS 23. Depending on the exemplary embodiment, even when the BMS 23 transmits a turn-on control signal to the main relays M_SW1 and M_SW2, the main relays M_SW1 and M_SW2 may be in an off state when the main relays M_SW1 and M_SW2 do not receive drive power from the auxiliary battery 13.

The first main relay M_SW1 may be connected between a positive electrode of the main battery 21 and the first output terminal OUT1 of the battery system 2. The second main relay M_SW2 may be connected between a negative electrode of the main battery 21 and the second output terminal OUT2 of the battery system 2. In FIG. 1, both the first main relay M_SW1 and the second main relay M_SW2 are illustrated, but the present disclosure is not limited thereto, and the battery system 2 may include only one first main relay M_SW1.

The boosting charge relays BC_SW1 and BC_SW2 may be connected in series to the main relays M_SW1 and M_SW2 to strengthen the electrical connection of the battery system 2 and the charge system 3. For example, the boosting charge relays BC_SW1 and BC_SW2 may correspond to mechanical relays that are turned on or off by being supplied with drive power. According to the exemplary embodiment, the boosting charge relays BC_SW1 and BC_SW2 may be mounted on the battery system 2 using the boosting charge method.

The boosting charge relays BC_SW1 and BC_SW2 may be switched turn-on or turn-off in response to a control signal from the BMS 23 while receiving the drive power from the auxiliary battery 13. According to the exemplary embodiment, even though the BMS 23 transmits a turn-on control signal to the boosting charge relays BC_SW1 and BC_SW2, the boosting charge relays BC_SW1 and BC_SW2 may be in an off state when the boosting charge relays BC_SW1 and BC_SW2 fail to receive drive power from the auxiliary battery 13.

The first boosting charge relay BC_SW1 may be connected in series with the first main relay M_SW1 between the positive electrode of the main battery 21 and the first output terminal OUT1 of the battery system 2. The second boosting charge relay BC_SW2 may be connected in series with the second main relay M_SW2 between the negative electrode of the main battery 21 and the second output terminal OUT2 of the battery system 2. In FIG. 1, both the first boosting charge relay BC_SW1 and the second boosting charge relay BC_SW2 are illustrated, but the present disclosure is not limited thereto, and the battery system 2 may include only one boosting charge relay BC_SW1.

The BMS 23 may provide overall management of the battery system 2. Referring to FIG. 2, the BMS 23 may include the second power interruption switch P_SW2, a battery control unit (MCU) 231, and a battery communication unit 233.

The second power interruption switch P_SW2 may electrically connect the auxiliary battery 13 and the boosting charge relays BC_SW1 and BC_SW2, and control the drive power to be supplied or interrupted to the boosting charge relays BC_SW1 and BC_SW2. However, the present disclosure is not limited thereto, and the second power interruption switch P_SW2 may be located on one side of the vehicle system 1 or the battery system 2 external to the BMS 23. Further, for example, the second power interruption switch P_SW2 may be an electronic relay that utilizes semiconductor elements to provide a fast response speed, low electrical noise and low noise.

According to embodiments, the second power interruption switch P_SW2 may be a Bipolar Junction Transistor (BJT). A base B of the second power interruption switch P_SW2 may be connected to the vehicle system 1 to receive a drive signal CS. A collector C of the second power interruption switch P_SW2 may be connected to the output terminal of the auxiliary battery 13. An emitter E of the second power interruption switch P_SW2 may be connected to the boosting charge relays BC_SW1 and BC_SW2.

For example, the second power interruption switch P_SW2 is an NPN-type transistor that may be turned on by a high-level drive signal CS and turned off by a low-level drive signal CS. When the second power interruption switch P_SW2 is turned on, the drive power of the auxiliary battery 13 may be supplied to the boosting charge relays BC_SW1 and BC_SW1.

Depending on the exemplary embodiment, an event, such as overheating of the main battery 21, may occur when at least one of the main relays M_SW1 and M_SW2 and the boosting charge relay BC_SW1 and BC_SW1 cannot be controlled by a control signal due to failure of the main relay M_SW1 and M_SW2, the boosting charge relay BC_SW1 and BC_SW1, and/or the BMS 23, and the like. The BMS 23 may then transmit the first emergency alarm message to the vehicle system 1. The vehicle system 1 may then control the first power interruption switch P_SW1 and the second power interruption switch P_SW2 to be turned off to interrupt the drive power supplied to the main relays M_SW1 and M_SW2 and the boosting charge relay BC_SW1 and BC_SW1.

The battery control unit (MCU) 231 may provide overall management of the BMS 23. For example, when an event occurs, such as an emergency situation including overheating of the main battery 21, the control unit (MCU) 231 may deliver a turn-off control signal to the main relays M_SW1 and M_SW2 and/or the boosting charge relays BC_SW1 and BC_SW1 to disconnect the electrical connection between the battery system 2 and the charge system 3.

The battery communication unit 233 may include a communication module capable of communicating with the vehicle communication unit 15. For example, the battery communication unit 233 may transmit the first emergency alarm message to the vehicle system 1 under the control of the battery control unit (MCU) 231.

The charge system 3 may provide power to the main battery 21 of the battery system 2. In other words, the main battery 21 may be charged with power provided by the charge system 3. For example, the charge system 3 may charge the main battery 21 of the battery system 2 with a boosting charge method.

Referring to FIG. 2, the charge system 3 includes a charge communication unit 31 and a charging control unit (CCU) 33.

The charging control unit (CCU) 33 may deliver the status of the charge system 3 to the vehicle system 1 via the charge communication unit 31. According to the exemplary embodiment, the charge control unit (CCU) 33 may transmit the second emergency alarm message to the vehicle system 1 via the charge communication unit 31.

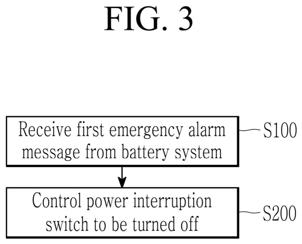

FIG. 3 is a flow diagram illustrating a power blocking method according to another embodiment.

Referring to FIG. 3, the vehicle system 1 receives a first emergency alarm message from the battery system 2 (S100).

The first emergency alarm message may include information about a status in which the battery system 2 is unable to control at least one of the main relays M_SW1 and M_SW2 and the boosting charge relays BC_SW1 and BC_SW1.

Next, the vehicle system 1 controls the first power interruption switch P_SW1 and P_SW2 to be turned off (S130).

Referring to FIG. 1, when the first power interruption switch P_SW1 is turned off, the drive power supplied to the main relays M_SW1 and M_SW2 is interrupted. The main relays M_SW1 and M_SW2 are then turned off, and the battery system 2 and the charge system 2 may be electrically disconnected.

For example, when the charge system 3 is a boosting charge system that charges the main battery 21 in less than a predetermined reference time, the battery system 2 may include both the boosting charge relays BC_SW1 and BC_SW2 and the power interruption switches P_SW1 and P_SW2. When the first emergency alarm message is received from the battery system 2, the vehicle system 1 may control the first power interruption switch P_SW1 and the second power interruption switch P_SW2 to be turned off.

Referring to FIG. 2, when the first power interruption switch P_SW1 and the second power interruption switch P_SW2 are turned off, the drive power supplied to the main relays M_SW1 and M_SW2 and the boosting charge relays BC_SW1 and BC_SW2 is interrupted. The main relays M_SW1 and M_SW2 and the boosting charge relays BC_SW1 and BC_SW2 are then turned off, and the battery system 2 and the charge system 2 may be electrically disconnected.

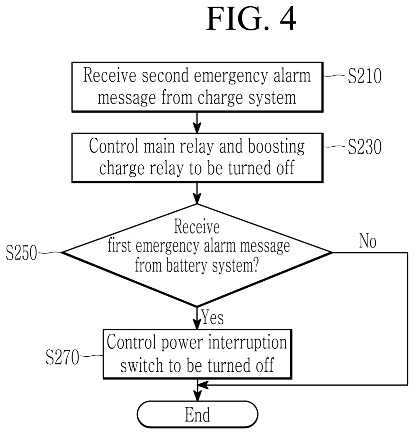

FIG. 4 is a flow diagram illustrating a power interruption method according to another embodiment.

Referring to FIG. 4, the vehicle system 1 receives a second emergency alarm message from a charge system 3 (S210).

The second emergency alarm message may include status information that does not meet a preset charging condition. For example, the second emergency alarm message may include information about the occurrence of an event that requires immediate electrical disconnection of the charge system 3 and the battery system 2.

Next, the vehicle system 1 transmits a signal to the battery system 2 that controls the main relays M_SW1 and M_SW2 to be turned off (S230).

For example, when the charge system 3 is a boosting charge system that charges the main battery 21 in less than a predetermined reference time, the battery system 2 may include both the boosting charge relays BC_SW1 and BC_SW2 and the power interruption switches P_SW1 and P_SW2. When the vehicle system 1 receives the second emergency alarm message from the charge system 3, the vehicle system 1 delivers a signal to the battery system 2 that controls the main relays M_SW1 and M_SW2 and the boosting charge relays BC_SW1 and BC_SW1 to be turned off.

Next, the vehicle system 1 determines whether the first emergency alarm message is received from the battery system 2 (S250).

Next, when the first emergency alarm message is not received as a result of the determination (NO in S250), the vehicle system 1 exits the current state. Specifically, the failure of the battery system 2 to transmit the first emergency alarm message to the vehicle system 1 may indicate that the main relays M_SW1 and M_SW2 and the boosting charge relays BC_SW1 and BC_SW1 were normally controlled to be turned off by the battery system 2.

Next, when the first emergency alarm message is received as a result of the determination (NO in S250), the vehicle system 1 controls the first power interruption switch P_SW1 to be turned off (S270).

Operation S270 may be the same as operation S130 described earlier. That is, for example, when the charge system 3 is a boosting charge system and the first emergency alarm message is received from the battery system 2, the vehicle system 1 may control the first power interruption switch P_SW1 and the second power interruption switch P_SW2 to be turned off. While this invention has been described in connection with what is presently considered to be practical exemplary embodiments, it is to be understood that the invention is not limited to the disclosed exemplary embodiments.

## Claims

1. A vehicle system comprising:
a battery system including a main battery including a plurality of battery cells, a main relay electrically connecting the main battery to a charge system, a battery management system (BMS) controlling the main relay, and a battery communication unit;
an auxiliary battery for supplying drive power to the main relay;
a first power interruption switch for connecting the auxiliary battery and the main relay such that power discharged from the auxiliary battery is supplied to the main relay as drive power;
a vehicle communication unit in communication with the charge system and the battery communication unit; and
a vehicle control unit for controlling the first power interruption switch to be turned off upon receiving a first emergency alarm message including status information indicating that the main relay is not controlled to be turned off from the battery system via the vehicle communication unit.

2. The vehicle system of claim 1, further comprising:
a boosting charge relay connected with the main relay in series, and
a second power interruption switch for connecting the auxiliary battery and the boosting charge relay such that power discharged from the auxiliary battery is supplied to the boosting charge relay as drive power.

3. The vehicle system of claim 1, wherein:
the vehicle control unit controls, upon receiving the first emergency alarm message, the second power interruption switch to be turned off.

4. The vehicle system of claim 3, wherein:
the vehicle control unit, upon receiving a second emergency alarm message including status information indicating that a predetermined charging condition is not satisfied from the charge system via the vehicle communication unit, controls, via the BMS, the main relay and the boosting charge relay to be turned off.

5. The vehicle system of claim 4, wherein:
the vehicle control unit controls, upon receiving the second emergency alarm message, the first power interruption switch and the second power interruption switch to be turned off.

6. The vehicle system of claim 1, wherein:
the auxiliary battery is a low-power battery that provides drive power to an electronic component equipped in the vehicle system.

7. The vehicle system of claim 3, wherein:
the charge system is a boosting charge system that charges the main battery in less than a predetermined reference time.

8. A power interruption method of interrupting an electrical connection between a battery system and a charge system, the battery system including a main battery including a plurality of battery cells, and a main relay electrically connecting the main battery and the charge system, the power interruption method comprising:
receiving a first emergency alarm message including status information indicating that the main relay is not controlled to be turned off from the battery system; and
controlling a first power interruption switch connecting the main relay with an auxiliary battery supplying drive power to the main relay to be turned off.

9. The power interruption method of claim 8, wherein:
the battery system further includes
a boosting charge relay connected in series with the main relay, and a second power interruption switch connecting the boosting charge relay with the auxiliary battery supplying drive power to the boosting charge relay, and
the controlling of the first power interruption switch to be turned off further includes
controlling the second power interruption switch to be turned off.

10. The power interruption method of claim 8, further comprising:
prior to the receiving of the first emergency alarm message from the battery system,
receiving a second emergency alarm message including status information indicating that a preset charging condition is not satisfied from the charge system; and
delivering a signal to the battery system that controls the main relay and the boosting charge relay to be turned off.
